# EUROPEAN PATENT SPECIFICATION

(11) **EP 1 706 002 B1**
(45) Date of publication and mention of the grant of the patent: **22.08.2007**
(21) Application number: 05700823.7
(22) Date of filing: 10.01.2005
(51) Int. Cl.: A23L 1/39, A23L 1/40, A23D 9/00, C11C 3/02, C11C 3/10

(54) **SAVOURY FOOD COMPOSITION COMPRISING LOW-TRANS TRIGLYCERIDE FAT COMPOSITION**
SALZIGE NAHRUNGSMITTELZUSAMMENSETZUNG, DIE EINE ZUSAMMENSETZUNG MIT NIEDRIGEM TRANS-TRIGLYCERIDFETTGEHALT ENTHÄLT
COMPOSITION ALIMENTAIRE SALÉE COMPRENANT UNE COMPOSITION GRASSE DE TRIGLYCERIDES À CONTENU RÉDUIT D'ACIDES GRAS DE TYPE TRANS

(30) Priority: 28.01.2004 EP 04075239
(43) Date of publication of application: 04.10.2006
(73) Proprietor: UNILEVER N.V., 3013 AL Rotterdam (NL); UNILEVER PLC, London, Greater London EC4P 4BQ (GB)
(72) Inventor: LANSBERGEN, Gabriel, Jacobus, Theodorus, NL-2242 BX Wassenaar (NL)
(74) Representative: Wurfbain, Gilles L.
(86) International application number: PCT/EP2005/000193
(87) International publication number: WO 2005/074722

(56) References cited:
- WO-A-03/037095
- US-A- 5 514 406
- US-A- 5 871 799
- DATABASE FSTA [Online] INTERNATIONAL FOOD INFORMATION SERVICE (IFIS), FRANkFURT-MAIN, DE; FSTA 1999, ARO A ET AL: "Trans fatty acids in French fries, soups and snacks from 14 European countries: the TRANSFAIR study." XP002287357 Database accession no. 1999-00-g0144

## Description

### Field of the invention

The present invention relates to a savoury food composition in a non-compressed free-flowing powdery form, which composition comprises a fat powder and salt. More specifically, the fat is (a blend of) triglycerides of fatty acids, wherein the composition is low in triglycerides of trans-unsaturated fatty acids.

### Background of the invention

There is a large group of food compositions (e.g. savoury food compositions) that are in a non-compressed free-flowing powdery form, packaged in e.g. portioned sachets. Such compositions are often dry, and can yield an edible product upon mixing with water, optionally with heating. Dry in this context is to be understood as comprising less than 15% (wt), preferably less than 10% (wt) of water. Examples of such products are e.g. powdery soup-and sauce mixes (or ingredients thereof, such as binders), but also dessert mixes, which can be (part of) instant products (e.g. instant pasta with a powdery sauce composition, either in separate packaging or in joint packaging). Such compositions usually contain fat and either salt or sugar, next to a range of other components (flavourings, colourings, herbs, spices, dried vegetable particles or powder, dry pieces of meat or cheese, etcetera). The consumer is very much used to such non-compressed free-flowing powdery form, and thus this is a desired physical format.

The fats in such compositions usually comprise a considerable amount of triglycerides of fatty acids (hereinafter for short: triglycerides). Fats are usually mixtures of various triglycerides. The type of fat or fat blend used for a given purpose is determined (next to availability and price) by e.g. the properties the fat has and how it performs in a given product, and in the manufacture of such product. The fat should perform well on e.g. taste, melting in the mouth, taste keepability, but also on ability to be processed into a suitable product as well as performance in the packed product, e.g. keepability. Additionally, in the present case, the fats should be compatible with the desired non-compressed free-flowing powdery form of the composition. This means that for some purposes a small amount of liquid fat (liquid at room temperature, i.e. oil) may be employed, as that can be e.g. adsorbed by the other powdery ingredients. There are, however limits to the amount of such liquid oil, e.g. it should not form one big lump in the package. When more then a certain amount of fat is desired, not all fat can be in the form of liquid oil. For other purposes (e.g. specific manufacturing processes) a liquid fat is not desired at all. Hence, a fat is needed which is to a large extent solid at room temperature, and which can be made in a non-compressed free-flowing powdery form, preferably as a free flowing powder. In this context it is to be understood that the fat is in the form of powder, flakes or granules, all with a size smaller than 2x2x2 mm, preferably less than 1x1x1 mm, more preferably less than 0.5x0.5x0.5 mm.

The triglycerides (which form part or all of the fat) are usually obtained from vegetable sources and may have been subjected to various treatments, such as fractionation (dry or wet), purification, hardening, interesterification, blending etcetera, to give the fat the desired product properties. Hardening unsaturated fat or triglycerides to saturated or partially unsaturated fat or triglycerides is in particular a tool used to obtain the desired melting behaviour. In this way, oils or soft fats can be turned into fats showing more suitable properties for solid or dry formulations.

The hardening process may lead to formation of a certain amount of so-called trans-unsaturated fatty acids (and/or triglycerides of such trans-unsaturated fatty acids), in short TFA's. For various reasons it may be desired to reduce or eliminate the amount of trans-unsaturated fatty acids (and triglycerides thereof) in products. For spreads (margerines and the like) a wide range of possible alternative fats and triglycerides are proposed, as is disclosed in e.g. WO 97/16978 and WO 96/39855.

The triglycerides mentioned in such applications frequently contain lauric acid (C12 saturated fatty acid). It has been found that when one wishes to find an alternative for the trans-unsaturated fatty acids (and fats containing them) in savoury applications lauric acid is undesired. Lauric acid and triglycerides containing lauric acid may show a range of desirable properties, in particular melting behaviour, but in a savoury application triglycerides of lauric acid were found to lead to a (soapy) off-flavour, especially after prolonged storage.

Hence, there is a desire for dry, non-compressed free-flowing savoury food products which contain triglyceride fats which are low in trans-unsaturated fatty acids (e.g. below 5% of the total fats present, preferably less than 2%), but which still should perform well in a (savoury) composition, in particular concerning processability, fat staining, crystallisation, mouthfeel, and other characteristics as mentioned above. Preferably, such product should also be low in lauric acid or triglycerides thereof (e.g. below 10% of the total fats present, preferably less than 3%, most preferably less than 0.5% wt of the total fats present). Solutions to this have been proposed in patent application PCT/EP03/12031 published as WO-A-04 045 296. However, herein it is not addressed how a free flowing powdered fat, low in transunsaturated fatty acids can be obtained, which can perform well in a savoury food composition which is in a non-compressed free-flowing powdery form. A possible solution could be to use high-melting fats. However, such fats do often not display acceptable behaviour in the final product, e.g. mouthfeel, melting in the mouth (they can be waxy), etcetera. Thus, there is a need for a fat which can be made into a fat which is in a powdery form at room temperature, preferably a free-flowing fat powder, in a convenient way. Additionally, such fat should display good properties in the final product as set out above. Although the bulk (e.g. at least 80% by weight of the total formulation) of the ingredients will be a non-compressed free-flowing powdery material, the savoury compositions according to the present invention may comprise e.g. up to 20% by weight of the total formulation of dry, non-powdery matter, e.g. dry pieces of herbs, vegetables, croutons, cheese, or meat. Such ingredients are customary in e.g. dry soup or sauce formulations and, when dispersed in the bulk of the powdery material do not affect the con-compressed, frre-flowing nature of the product. Nest to e.g. fat and salt other con-compressed free flowing powdery materials may be present, such as starch, maltodextrins, vegetable powdre, monosodium glutamate, etcetera.

Triglyceride fats can be grouped according to the fatty acids of which they consist (i.e. the acyl moiety of triacyl glycerides). Such groups can be identified by a letter, and herein:
H means saturated fatty acid of 16 carbon atoms or longer (C16+, e.g. up to C24)
U means unsaturated fatty acids in cis conformation (any chain length)
E means unsaturated fatty acids in trans conformation (any chain length)
M means saturated fatty acids of 10-14 carbon atoms (C10-C14)

As the present application is about triglycerides of such fatty acids, the fatty acid composition of the triglycerides is given by for example:
H3 (meaning a triglyceride of 3 saturated fatty acids of 16 or more carbon atoms)
H2E (meaning a triglyceride of 2 saturated fatty acids of 16 or more carbon atoms and 1 trans-unsaturated fatty acid)
H2M (meaning a triglyceride of 2 saturated fatty acids of 16 or more carbon atoms and 1 saturated fatty acid of 10-14 carbon atoms)
H2U (meaning a triglyceride of 2 saturated fatty acids of 16 or more carbon atoms and 1 cis-unsaturated fatty acid)
HE2 (meaning a triglyceride of 1 saturated fatty acid of 16 or more carbon atoms and 2 trans-unsaturated fatty acids), and so on for other 3 letter codes.

Fat compositions can thus be characterised in containing certain weight percentages (based on the total amount of triglycerides) of triglycerides of the above codes.

Although it is mentioned for E and U that they may have any length, it is to be understood that this relates to fatty acids of approx. 8-24 carbon atoms, and more usually 16-20 carbon atoms. Known fatty acids in triglycerides are palmitic acid (C16:0) and stearic acid (C18:0). The contents of these in fatty acid triglycerides can be measured.

### Summary of the invention

It has now been found that the objectives as given above may be met (at least in part) by the use in a savoury food composition which is in a non-compressed free-flowing powdery form of a particulate fat comprising triglycerides of fatty acids, wherein the amount of H3 (triglyceride of 3 saturated fatty acids of 16 or more carbon atoms) and H2U (triglyceride of 2 saturated fatty acids of 16 or more carbon atoms and 1 cis-unsaturated fatty acid) taken together is at least 55% (preferably at least 65%) wt based on the total amount of triglycerides, and wherein the the ratio palmitic acid / stearic acid in the fatty acid triglycerides is less than 4, and at least 0.2. Preferably, said ratio is below 3, more preferably below 2.

In other words: of the fat in the composition according to the invention H3 + H2U ≥ 55%, preferably ≥ 65% wt, based on total triglycerides, next to the referred ratio palmitic acid stearic acid in the fatty acid triglycerides. This means that of the total amount of triglycerides present in the fat composition according to the invention at least 55% wt (preferably at least 65% wt) are triglycerides of fully saturated C16 and longer chains (e.g. C16, C18, C20, C22 and C24) and/or triglycerides containing one cis-unsaturated fatty acid of any chain length and two saturated fatty acids of 16 or more carbon atoms

Additionally, it was found that it is preferred that the amount of stearic acid in the triglycerides in the fat in the composition is at least 15% of all fatty acids in the triglycerides, preferably at least 20%, more preferably at least 25% the ratio palmitic acid / stearic acid in the fatty acid triglycerides is at least 0.2, preferably at least 0.5 (in connection to any of the given upper limits given above).

Regarding the crystallisation properties, it was found that for the given purpose, it is important that the fat composition is such that a combination of high level of solid formation (in a given time) and a fairly rapid onset of crystallisation is achieved (and not just the latter, which can be achieved with known fats, whilst still the mouthfeel and other properties in use should be good. An indication of the solids formation and crystallisation speed can be given by crystallisation experiments and N-value measurements

It was found that the fat as specified above can be processed into the required particulate fat (or even more preferred into a free-flowing fat powder) by a spray-cooling said fat.

### Detailed description of the invention

In the fat as used in this invention it is preferred that the amount of H3 (triglyceride of 3 saturated fatty acids of 16 or more carbon atoms) is at least 20% wt based on the total amount of triglycerides, preferably at least 25%. Also, it is preferred that the amount of H2U (triglyceride of 2 saturated fatty acids of 16 or more carbon atoms and 1 cis-unsaturated fatty acid) taken together is at least 30% wt based on the total amount of triglycerides. Apart from the amounts of H3 and H2U it can be preferred to use fats of such composition in a particular ratio. In this case, the ratio H3/H2U is preferably between 0.5 and 1.2. It is preferred that the amount of H (i.e. saturated fatty acids of 16 or more carbon atoms) of the fat is between 55 and 80%, preferably between 60 and 75% wt based on total amount of fatty acids. Normally, only fatty acids are used with even number of carbon atoms. Similarly, it is preferred that the amount of U (cis-unsaturated fatty acids of any suitable chain length) is between 20 and 45% wt based on total amount of fatty acids.

In the fat as used in the present invention the amount of palmitic fatty acid (C16:0) in the triglycerides is preferably between 25 and 50% wt based on the total amount of fatty acids.

A preferred fat (preferably free-flowing) according to the invention comprises 25-100% of an interesterified fat blend of:
(a) 40-80% PO (palm oil) and
(b) 20-60% of a fully hardened fat such as from rape (with a melting point of 68°C, i.e. RP68) and/or from soybean oil (with a melting point of 65°C, i.e. BO 65), and/or sunflower (oil or fully hardened).

Alternatives to this can be interesterified fat blends of the same part (b) above, but for part (a) a blend of a dry-fractionated palm stearin (e.g. with a melting point of approx. 53°C) and unhardened rape oil.

Following the invention, it is now possible to manufacture a savoury food composition in a non-compressed free-flowing powdery form, comprising 0.5-50% wt (preferably 1-40% wt) of particulate fat according to this invention, 2-80% wt (preferably 5-50%) of an edible salt and which composition contains less than 15% wt (preferably less than 10% wt) of water. In this, the triglycerides can be selected such that they contain less than 5%, preferably less than 2% wt of trans-unsaturated fatty acids, and preferably having less than 10% wt (more preferably less than 3%, most preferably less than 0.5%) of lauric acid, and wherein the fats still have the desired melting and crystallisation behaviour. Usually, such compositions further comprise 0.1-50% wt of starch and/or flour and/or maltodextrin and/or 0.1-50% wt of powdery herbs and/or spices and/or tomato powder and/or monosodium glutamate. The savoury compositions according to the present invention may comprise e.g. up to 20% by weight of the total formulation of dry, non-powdery matter, e.g. dry pieces of herbs, vegetables, croutons, cheese, or meat.

Examples of composition according to the above are soup- or sauce concentrates, which yields a soup or sauce upon mixing and heating with an aqueous liquid. Such soup- or sauce concentrates are preferably in the form of a free flowing powder, optionally containing larger vegetable particulates such as dry herbs or vegetable pieces. As mentioned, a small amount of liquid oil (e.g. 0.1-5%, wt based on the total composition) may be present.

Following the above, it is now possible to manufacture e.g. dry soup or sauce concentrates in a non-compressed free-flowing powdery form which contain a large proportion of vegetable fats, which composition is substantially free from trans-fatty acids or triglycerides thereof.

In the compositions above at least 50% of the fats is of vegetable origin, and the compositions substantially free from trans-unsaturated fatty acids or triglycerides thereof. Preferably, the compositions according to the invention are substantially free from animal fat.

### EXAMPLES

Fat blends 1-3 were prepared from blending various fats and fats specifically produced according to the top section of table 1. POs is a dry-fractionated palm stearin with a melting point of approx. 53°C, PO is an unhardened palm oil, PO 58 is a palm oil hardened to a melting point of 58°C. The fatblend "Mix A" was prepared by interesterification of a 60% palm oil (PO), 40% rape 68 blend (RP68). In the second half of table 1 the fatty acid composition is given in accordance with the definitions as herein defined. The same data are given for other fat as comparative example (A) and (B).

**Table 1**

| | A | B | 1 | 2 | 3 | |
|---|---|---|---|---|---|---|
| Mix A | | | 35 | 65 | 100 | |
| POs | 100 | 45 | 65 | 35 | | |
| PO | | 40 | | | | |
| PO58 | | 15 | | | | |
| | | | | | | |
| H3 | 34 | 34 | 34 | 33 | 33 | |
| H2E | 0 | 0 | 0 | 0 | 0 | |
| H2M | 1 | 2 | 1 | 1 | 1 | |
| H2U | 42 | 39 | 42 | 42 | 42 | |
| HE2 | 0 | 0 | 0 | 0 | 0 | |
| H3/H2U | 0.81 | 0.86 | 0.79 | 0.79 | 0.80 | |
| H3+H2U | | | | | | |
| H | 68 | 66 | 69 | 69 | 70 | |
| E | 0 | 0 | 0 | 0 | 0 | |
| U | 32 | 34 | 31 | 31 | 30 | |
| Palmitic (P) | 60 | 52 | 50 | 41 | 31 | |
| Stearic (S) | 6 | 13 | 18 | 27 | 39 | |
| P/S | 10 | 4 | 2.8 | 1.5 | 0.8 | |

| | | | | | | |
|---|---|---|---|---|---|---|
| Note: the numbers of all the fats given with 3-letter codes do not add up to 100%, as some minor amounts of other fats are also present. | | | | | | |

Fats 1, 2 and 3 could be made into free-flowing powder by conventional spray cooling.

The fats and fat blends of table 1 have been analysed for their crystallisation rate and N-values. N-value measurements are a standard in the fat industry. The crystallisation rate as here measured was done by fully melting the fat, and then holding at a temperature of 20°C. After intervals of 5, 10, 15 and 20 minutes the content of crystallised fat was measured (using NMR). The results are set out in table 2.

**Table 2 crystallisation rates and N -values**

| | A | B | 1 | 2 | 3 | |
|---|---|---|---|---|---|---|
| Crystall. Rate in solids at 20°C after: | | | | | | |
| 5 minutes | 37 | 39 | 37 | 38 | 40 | |
| 10 minutes | 52 | 49 | 48 | 43 | 44 | |
| 15 minutes | 57 | 52 | 62 | 61 | 55 | |
| 20 minutes | 59 | 54 | 64 | 69 | 68 | |
| | | | | | | |
| N-values | | | | | | |
| N10 | 78.9 | 79.4 | 76.2 | 76.8 | 74.8 | |
| N20 | 64.7 | 66.3 | 70.6 | 72.2 | 60.7 | |
| N30 | 44.6 | 45.5 | 48.7 | 52.6 | 42.3 | |
| N35 | 35.6 | 35.6 | 38.3 | 41.7 | 34.2 | |
| N40 | 27.5 | 26.1 | 28.5 | 31.2 | 26.4 | |
| N50 | 11.4 | 0.2 | 0.4 | 4.8 | 5.5 | |

Fat blend 3 above has been used in the following compositions.

| | Soup powder | Sauce powder |
|---|---|---|
| Ingredients (wt %) | | |
| Salt, starch, flour, sugar | 63 | 48 |
| Herbs and spices | 9 | 3 |
| Milk powder | 17 | 45 |
| Vegetable pieces | 3 | 0 |
| Fat powder as 3 above | 6 | 3 |
| Liquid oil (SF) | 2 | 1 |

The products were made using conventional processing. Both were powdered mixes, which could be made into a soup and sauce in a conventional way.

## Claims

1. Savoury food composition in a non-compressed free-flowing powdery form, which composition comprises 0.5-50% wt preferably 1-40% wt, of powdered fat, 2-80% wt, preferably 5-50%, of an edible salt, which composition contains less than 15% wt, preferably less than 10% wt, of water, wherein said powdered fat comprises triglycerides of fatty acids, wherein the amount of H3 (triglyceride of 3 saturated fatty acids of 16 or more carbon atoms) and H2U (triglyceride of 2 saturated fatty acids of 16 or more carbon atoms and 1 cis-unsaturated fatty acid) taken together is at least 55% wt based on the total amount of triglycerides, and wherein the ratio palmitic acid / stearic acid in the fatty acid triglycerides is less than 4 and at least 0.2.

2. Savoury composition according to claim 1, wherein the ratio palmitic acid / stearic acid in the fatty acid triglycerides is at least 0.5.

3. Savoury composition according to claim 1-2, wherein the amount of stearic acid in the triglycerides is at least 15% of all fatty acids in the triglycerides.

4. Savoury composition according to claim 1-3 wherein said amount of H3 + H2U is at least 65% wt based on the total amount of triglycerides.

5. Savoury composition according to claim 1-4, wherein the amount of H3 (triglyceride of 3 saturated fatty acids of 16 or more carbon atoms) is at least 20% wt based on the total amount of triglycerides, preferably at least 25%.

6. Savoury composition according to claim 1-5, wherein the amount of H2U (triglyceride of 2 saturated fatty acids of 16 or more carbon atoms and 1 cis-unsaturated fatty acid) taken together is at least 30% wt based on the total amount of triglycerides.

7. Savoury composition according to claim 1-6, wherein the ratio H3 / H2U is between 0.5 and 1.2.

8. Savoury composition according to claim 1-7, wherein the amount of palmitic fatty acid (C16:0) based on the total amount of fatty acids is between 25 and 50% wt.

9. Savoury composition according to claim 1-8, comprising 25-100% of an interesterified fat blend of 40-80% palm oil and 20-60% of a fully hardened rape fat with a melting point of 68°C and/or a fully hardened soybean oil with a melting point of 65°C and/or sunflower oil or fully hardened sunflower oil.

10. Savoury composition according to claim 1-9, wherein the composition further comprises 0.1-50% wt of starch and/or flour and/or maltodextrin.

11. Savoury composition according to claim 1-10, wherein the composition further comprises 0.1-50% wt of powdery herbs and/or spices and/or tomato powder and/or monosodium glutamate.

12. Savoury composition according to claim 1-11, in the form of a soup- or sauce concentrate, which yields a soup or sauce upon mixing and heating with an aqueous liquid.

## Patentansprüche

1. Pikante Nahrungsmittelzusammensetzung in einer nicht-komprimierten, freifließenden, pulverigen Form, welche Zusammensetzung 0,5-50 Gew.-%, vorzugsweise 1-40 Gew.-% pulverisiertes Fett, 2-80 Gew.-%, vorzugsweise 5-50% eines essbaren Salzes umfasst, welche Zusammensetzung weniger als 15 Gew.-%, vorzugsweise weniger als 10 Gew.-% Wasser enthält, worin besagtes pulverisiertes Fett Triglyceride von Fettsäuren umfasst, die Menge an H3 (Triglycerid von 3 gesättigten Fettsäuren von 16 oder mehr Kohlenstoffatomen) und H2U (Triglycerid von 2 gesättigten Fettsäuren von 16 oder mehr Kohlenstoffatomen und 1 cis-ungesättigten Fettsäure) zusammen genommen mindestens 55 Gew.-% basierend auf der Gesamtmenge an Triglyceriden ist, und worin das Verhältnis Palmitinsäure/Stearinsäure in den Fettsäure-Triglyceriden geringer als 4 und mindestens 0,2 ist.

2. Pikante Zusammensetzung gemäß Anspruch 1, worin das Verhältnis Palmitinsäure/Stearinsäure in den Fettsäure-Triglyceriden mindestens 0,5 ist.

3. Pikante Zusammensetzung gemäß Anspruch 1-2, worin die Menge an Stearinsäure in den Triglyceriden mindestens 15% aller Fettsäuren in den Triglyceriden ist.

4. Pikante Zusammensetzung gemäß Anspruch 1-3, worin besagte Menge an H3 + H2U mindestens 65 Gew.-%, basierend auf der Gesamtmenge an Triglyceriden ist.

5. Pikante Zusammensetzung gemäß Anspruch 1-4, worin die Menge an H3 (Triglycerid von 3 gesättigten Fettsäuren von 16 oder mehr Kohlenstoffatomen) mindestens 20 Gew.-%, basierend auf der Gesamtmenge an Triglyceriden, vorzugsweise mindestens 25% ist.

6. Pikante Zusammensetzung gemäß Anspruch 1-5, worin die Menge an H2U (Triglycerid von 2 gesättigten Fettsäuren von 16 oder mehr Kohlenstoffatomen und 1 cis-ungesättigten Fettsäure) zusammen genommen mindestens 30 Gew.-% ist, basierend auf der Gesamtmenge an Triglyceriden.

7. Pikante Zusammensetzung gemäß Anspruch 1-6, worin das Verhältnis H3/H2U zwischen 0,5 und 1,2 ist.

8. Pikante Zusammensetzung gemäß Anspruch 1-7, worin die Menge an Palmitinfettsäure (C16:0), basierend auf der Gesamtmenge an Fettsäuren, zwischen 25 und 50 Gew.-% ist.

9. Pikante Zusammensetzung gemäß Anspruch 1-8, umfassend 25-100% einer umesterten Fettmischung aus 40-80% Palmöl und 20-60% eines vollständig gehärteten Rapsfetts mit einem Fließpunkt von 68°C und/oder einem vollständig gehärteten Sojaöl mit einem Fließpunkt von 65°C und/oder Sonnenblumenöl oder vollständig gehärtetes Sonnenblumenöl.

10. Pikante Zusammensetzung gemäß Anspruch 1-9, worin die Zusammensetzung ferner 0,1-50 Gew.-% Stärke und/oder Mehl und/oder Maltodextrin umfasst.

11. Pikante Zusammensetzung gemäß Anspruch 1-10, worin die Zusammensetzung ferner 0,1-50 Gew.-% pulverige Kräuter und/oder Gewürze und/oder Tomatenpulver und/oder Mononatriumglutamat umfasst.

12. Pikante Zusammensetzung gemäß Anspruch 1-11 in der Form eines Suppen- oder Soßenkonzentrats, welches eine Suppe oder Soße beim Mischen und Erhitzen mit einer wässerigen Flüssigkeit ergibt.

## Revendications

1. Composition alimentaire salée sous forme poudreuse non comprimée s'écoulant librement, laquelle composition comprend 0,5-50 % en poids, de préférence 1-40 % en poids, de graisse en poudre, 2-80 % en poids, de préférence 5-50 %, d'un sel comestible, laquelle composition contient moins de 15 % en poids, de préférence moins de 10 % en poids d'eau, ladite graisse en poudre comprenant des triglycérides d'acides gras, la quantité d'H3 (triglycéride de trois acides gras saturés de 16 atomes de carbone ou plus) et H2U (triglycéride de deux acides gras saturés de 16 atomes de carbone ou plus et d'un acide gras insaturé cis) pris ensemble étant au moins 55 % en poids de la quantité totale de triglycérides et le ratio acide palmitique/acide stéarique dans les triglycérides d'acide gras étant inférieur à 4 et d'au moins 0,2.

2. Composition salée selon la revendication 1, dans laquelle le ratio acide palmitique/acide stéarique dans les triglycérides d'acide gras est d'au moins 0,5.

3. Composition salée selon les revendications 1 à 2, dans laquelle la quantité d'acide stéarique dans les triglycérides est d'au moins 15 % de tous les acides gras dans les triglycérides.

4. Composition salée selon les revendications 1 à 3 dans laquelle ladite quantité de H3 + H2U est d'au moins 65 % en poids basée sur la quantité totale de triglycérides.

5. Composition salée selon les revendications 1 à 4, dans laquelle la quantité d'H3 (triglycéride de trois acides gras saturés de 16 atomes de carbone ou plus) est d'au moins 20 % en poids basée sur la quantité totale de triglycérides, de préférence d'au moins 25 %.

6. Composition salée selon les revendications 1 à 5, dans laquelle la quantité d'H2U (triglycéride de deux acides gras saturés de 16 atomes de carbone ou plus et d'un acide gras insaturé cis) pris ensemble est d'au moins 30 % en poids basée sur la quantité totale de triglycérides.

7. Composition salée selon les revendications 1 à 6, dans laquelle le ratio H3/H2U est entre 0,5 et 1,2.

8. Composition salée selon les revendications 1 à 7, dans laquelle la quantité d'acide gras palmitique (C16 : 0) basée sur la quantité totale d'acides gras est entre 25 et 50 % en poids.

9. Composition salée selon les revendications 1 à 8, comprenant 25-100 % d'un mélange de graisses interestérifié de 40-80 % d'huile de palme et de 20-60 % d'une graisse de colza entièrement durcie avec un point de fusion de 68 °C et/ou une huile de soja entièrement durcie avec un point de fusion de 65 °C, et/ou de l'huile de tournesol ou de l'huile de tournesol entièrement durcie.

10. Composition salée selon les revendications 1 à 9, dans laquelle la composition comprend en outre 0,1-50 % en poids d'amidon et/ou de farine et/ou de maltodextrine.

11. Composition salée selon les revendications 1 à 10, dans laquelle la composition comprend en outre 0,1-50 % en poids d'herbes et/ou d'épices en poudre et/ou de poudre de tomate et/ou de glutamate monosodique.

12. Composition salée selon les revendications 1 à 11, sous la forme d'un concentré de soupe ou de sauce, qui donne une soupe ou une sauce lorsqu'on la mélange et qu'on la chauffe avec un liquide aqueux.
